# EUROPÄISCHE PATENTSCHRIFT

(11) **EP 3 108 564 B1**
(45) Veröffentlichungstag und Bekanntmachung des Hinweises auf die Patenterteilung: **27.06.2018**
(21) Anmeldenummer: 15741773.4
(22) Anmeldetag: 23.03.2015
(51) Int. Cl.: H02J 3/38

(54) **HOCHSPANNUNGS-GLEICHSTROM-ÜBERTRAGUNGSSTRECKE**
HIGH-VOLTAGE DIRECT CURRENT TRANSMISSION PATH
LIAISON HAUTE TENSION EN COURANT CONTINU

(30) Priorität: 03.04.2014 EP 14163396
(43) Veröffentlichungstag der Anmeldung: 28.12.2016
(73) Patentinhaber: Siemens Aktiengesellschaft, 80333 München (DE)
(72) Erfinder: HEROLD, Jochen, 96260 Weismain (DE)
(86) Internationale Anmeldenummer: PCT/EP2015/056101
(87) Internationale Veröffentlichungsnummer: WO 2015/150143

(56) Entgegenhaltungen:
- EP-A1- 1 596 052
- WO-A1-2011/120572
- DE-A1-102004 044 646
- DE-A1-102009 042 865
- DE-B3-102009 004 677
- DE-B3-102009 004 679
- DE-U1-202012 012 080
- US-A1- 2005 286 268
- US-A1- 2013 042 626

## Beschreibung

Die Erfindung betrifft eine Hochspannungs-Gleichstrom-Übertragungsstecke (auch kurz HGÜ-Stecke genannt).

Der Transport, die Übertragung und die Verteilung elektrischer Energie kann im Allgemeinen mittels Gleichstrom erfolgen, wobei eine solche Strecke Hochspannungs-Gleichstrom-Übertragungsstrecke genannt wird. Gegenüber Wechselstrom-Übertragungsstrecken weist eine Hochspannungs-Gleichstrom-Übertragungsstrecke geringere Transportverluste auf. Die Gleichspannung beträgt bei der Hochspannungs-Gleichstrom-Übertragungsstrecke mehrere 100.000 Volt.

DE 10 2009 004 679 B3 und DE 10 2009 004 677 B3 offenbaren ein Stromversorgungssystem und Photovoltaikeinrichtungen zur Einspeisung von mittels photovoltaisch gewonnener Energie in Hochspannungs-Gleichstrom-Übertragungsstrecken.

Ein Stromrichter für Hochspannungs-Gleichstrom-Übertragung wird in WO 2011/120572 A1 offenbart.

US 2013/042626 A1 offenbart elektrolytische Speicherung elektrischer Energie. EP 1 596 052 A1 offenbart ein Kraftwerksystem mit einem ersten Kraftwerk zum Erzeugen von elektrischem Strom aus einer regenerativen Energiequelle, einem Wasserstofferzeuger zum Erzeugen von Wasserstoff mittels des von dem ersten Kraftwerk erzeugten Stromes, einem Speicher zum Speichern des erzeugten Wasserstoffes und einem zweiten Kraftwerk zum Erzeugen von elektrischem Strom mittels des gespeicherten Wasserstoffes.

DE 10 2004 044646 A1 offenbart ein Brennstoffzellen-System für Luftfahrzeuge.

DE 10 2009 042865 A1 offenbart ein Verfahren und eine Vorrichtung zur automatischen Stabilisierung eines Netzes für elektrische Energieversorgung mit zumindest einem Stromrichter.

US 2005/286268 A1 offenbart ein Stromwandlersystem, das einen mit einer Stromquelle verbundenen Stromrichter umfasst und dazu ausgebildet ist, einen Gleichstrom in ein variables Wechselstromsignal umzuwandeln.

DE 20 2012 012080 U1 offenbart eine Anordnung mit einem Halbleiterstellglied zur Einstellung eines Stromflusses, einer Gatesteuerstufe des Halbleiterstellgliedes und einem Energieversorgungsmittel für die Gatesteuerstufe.

Der Erfindung liegt die Aufgabe zugrunde, eine Hochspannungs-Gleichstrom-Übertragungsstrecke anzugeben, welche eine einfache Einspeisung von zusätzlicher elektrischer Energie und/ oder eine einfache Entnahme von benötigter elektrischer Energie ermöglicht.

Die Aufgabe wird erfindungsgemäß durch die Merkmale des Patentanspruchs 1 gelöst. Vorteilhafte Ausführungsformen der Erfindung sind Gegenstand der abhängigen Patentansprüche.

Die erfindungsgemäße Hochspannungs-Gleichstrom-Übertragungsstrecke umfasst mindestens eine oder zwei oder mehrere Leitungen, wobei entlang zumindest einer der Leitungen mindestens ein Einspeise- und/oder Entnahmepunkt vorgesehen ist, an welchem mindestens eine Gruppe von Elektrolysezellenstapeln direkt mittels einer Thyristor-Schaltanordnung zuschaltbar ist. Die Thyristor-Schaltanordnung je einer Gruppe von Elektrolysezellenstapeln umfasst einen Netz-Thyristor, einen Bypass-Thyristor und ein parallel zu dem Netz-Thyristor geschaltetes Notfall-Schließelement in einer Bypass-Leitung.

Eine Ausgestaltung der Erfindung sieht vor, dass an mindestens einem Entnahme-/Einspeisepunkt mindestens eine Gruppe von Brennstoffzellenstapeln direkt mittels einer Thyristor-Schaltanordnung zuschaltbar ist.

Durch eine solche direkte Aufschaltung von Gruppen von Elektrolysezellenstapeln sowie optional von Brennstoffzellenstapeln mittels der Thyristor-Schaltanordnung kann eine übliche aufwendige Leistungselektronik, wie Umrichter- und Transformatoren-Anordnung, entfallen. Durch den Entfall der aufwendigen Leistungselektronik entstehen keine Wandlerverluste, so dass der Wirkungsgrad deutlich erhöht ist. Somit ist die Teileanzahl deutlich reduziert. Eine solche Anlage ist verschleißärmer und kostengünstiger. Ferner sind keine Hoch-Leistungsschalter erforderlich.

Zusätzliche Energie, die auf die Leitung eingespeist und/oder von dieser entnommen wird, kann einfach entlang der gesamten Hochspannungs-Übertragungsstrecke oder an den Enden der Leitungen eingespeist bzw. entnommen werden. Bei der Hochspannungs-Gleichstrom-Übertragungsstrecke handelt es sich insbesondere um eine ein-, zwei-, drei- oder mehradrige Strecke (= mehradrige Strecke) je Pol bei einem (Monopolaranordnung) oder mehreren Polen (Bipolaranordnung), insbesondere je positivem oder negativem Pol.

Dabei können die Gruppen von Elektrolysezellenstapeln und/oder Brennstoffzellenstapeln separat an einem der Komponenten der Hochspannungs-Gleichstrom-Übertragungsstrecke, insbesondere an eine der Leitungen oder an mehrere der Leitungen direkt parallel geschaltet/gekoppelt werden.

In einer möglichen Ausführungsform sind die Elektrolysezellenstapel einer der Gruppen in einem parallel zu der Leitung angeordneten Bypass in Reihe geschaltet. Infolge der Entnahme der benötigten elektrischen Energie für die Elektrolysezellenstapel führt der Strom, der durch die einzelnen Elektrolysezellen fließt, zu einem Spannungsabfall an jeder Elektrolysezelle des Elektrolysezellenstapels. Der Strom führt somit die Spannung.

Erforderliche zentrale Wasserstoff- und Sauerstoffspeicher und deren Anlagen werden durch die gruppenweise Zu- und Abschaltung einzelner oder mehrerer Gruppen von Elektrolysezellenstapeln und/oder Brennstoffzellenstapeln gesteuert und geregelt. Dabei kann die Wasserstoff-/Sauerstoffanlage für die Gruppen von Elektrolysezellenstapeln und die Gruppen von Brennstoffzellenstapeln im Bereich der Hochspannungs-Gleichstrom-Übertragungsstrecke, insbesondere ober- und/oder unterirdisch, angeordnet sein.

Eine weitere Ausführungsform sieht vor, dass die Thyristor-Schaltanordnung je einer Gruppe von Brennstoffzellenstapeln mindestens einen Netz-Thyristor und einen Bypass-Thyristor umfasst. Hierdurch ist eine weitgehend risikoarme und kurzschlussfeste Zu-/Abschaltung der Gruppen von Brennstoffzellenstapeln in die Hochspannungs-Gleichstrom-Übertragungsstrecke ermöglicht.

Entlang der Hochspannungs-Gleichstrom-Übertragungsstrecke können dabei mehrere Gruppen von Elektrolysezellenstapeln und/oder Brennstoffzellenstapeln nacheinander durch jeweils einen Netz-Thyristor und einen Gruppen-Thyristor getrennt in zumindest eine der Leitungen gekoppelt oder zugeschaltet werden. Durch eine solche Anordnung und Zuschaltung/Abschaltung mehrerer Gruppen von Elektrolysezellenstapeln und/oder Brennstoffzellenstapeln entlang der Hochspannungs-Gleichstrom-Übertragungsstrecke kann ein aufwendiges Wasserstoffnetz mit kleineren Wasserstoff-Anlagen entfallen.

Eine Weiterbildung sieht vor, dass die Brennstoffzellenstapel einer der Gruppen, insbesondere jeder Gruppe, in einem parallel zu der Leitung angeordneten weiteren Bypass über jeweils eine zugehörige Bypass-Diode parallel zu diesem weiteren Bypass geschaltet sind. Hierdurch kann bei einem Defekt oder im Fehlerfall einer der Brennstoffzellen des Brennstoffzellenstapels oder eines Brennstoffzellenstapels weiterhin erzeugte Energie der anderen Brennstoffzellen bzw. der anderen Brennstoffzellenstapel in die Hochspannungs-Gleichstrom-Übertragungsstrecke eingespeist werden.

Beispielsweise umfasst eine jeweilige Gruppe von Elektrolysezellen mindestens acht Elektrolysezellen, insbesondere eine Anzahl von Elektrolysezellen, die ein Vielfaches von zwei sind.

Zur variablen Entnahme und/oder Einspeisung von Energie, insbesondere in großen Stufen, aus bzw. in die Hochspannungs-Gleichstrom-Übertragungsstrecke ist je Gruppe von Elektrolysezellenstapeln und/oder Brennstoffzellenstapeln mindestens ein Gruppen-Schaltelement vorgesehen. Dabei kann oder können variabel, insbesondere stufenweise eine oder mehrere Gruppen von Elektrolysezellenstapeln und/oder Brennstoffzellenstapeln zugeschaltet werden.

Für eine feinere Unterteilung der Entnahme/Einspeisung von Energie aus/in die Hochspannungs-Gleichstrom-Übertragungsstrecke und somit eine variable Entnahme und/oder Einspeisung in kleinen Stufen kann je Elektrolysezellestapel und/oder Brennstoffzellestapel einer jeweiligen Gruppe mindestens ein Einzel-Schaltelement vorgesehen sein, so dass eine oder mehrere Elektrolysezellenstapel und/oder Brennstoffzellenstapel der jeweiligen Gruppe zuschaltbar sind/ist.

Gemäß einer Weiterbildung ist je Entnahme- und/oder Einspeisepunkt eine Steuerelektronik vorgesehen. Dabei können mehrere Gruppen von Elektrolysezellenstapeln und/oder Brennstoffzellenstapeln zu einer Entnahme- und/oder Speiseanlage zusammengefasst sein und eine gemeinsame zentrale Steuerelektronik umfassen. Hierzu sind die Komponenten beispielsweise über herkömmliche Datenübertragungsmittel, wie einem Datenbus oder eine Datenfunkstrecke, datentechnisch miteinander verbunden.

Darüber hinaus können mehrere Gruppen von Elektrolysezellenstapeln und/oder Gruppen von Brennstoffzellenstapeln mit einem zentralen Wasserstoff-Speicher und einem zentralen Sauerstoff-Speicher fluidisch koppelbar sein. Insbesondere örtlich nah beieinander angeordnete Gruppen von Elektrolysezellenstapeln und/oder Gruppen von Brennstoffzellenstapeln können eine Entnahme- und/oder Speiseanlage bilden, die zentrale Komponenten, wie einen zentralen Wasserstoff-Speicher, einen zentralen Sauerstoff-Speicher, eine zentrale Steuerungselektronik und eine zentrale Kühlung für alle Gruppen von Elektrolysezellenstapeln und/oder Brennstoffzellenstapeln umfasst. Hierdurch ist ein einfacher und kostengünstiger Anlagenaufbau ermöglicht. Dabei sind insbesondere mehrere Gruppen von Elektrolysezellenstapeln und/oder Gruppen von Brennstoffzellenstapeln in einen zentralen Kühlkreislauf geschaltet.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Zeichnungen näher erläutert werden. Dabei zeigen:
- FIG 1: schematisch ein Ausführungsbeispiel für eine Hochspannungs-Gleichstrom-Übertragungsstrecke mit einer Anzahl von direkt zu-/abschaltbaren Gruppen von Elektrolysezellenstapeln und Brennstoffzellenstapeln,
- FIG 2: schematisch ein weiteres Ausführungsbeispiel für eine Hochspannungs-Gleichstrom-Übertragungsstrecke mit einer Anzahl von direkt zu-/abschaltbaren Gruppen von Elektrolysezellenstapeln und Brennstoffzellenstapeln.

Einander entsprechende Teile sind in allen Figuren mit den gleichen Bezugszeichen versehen.

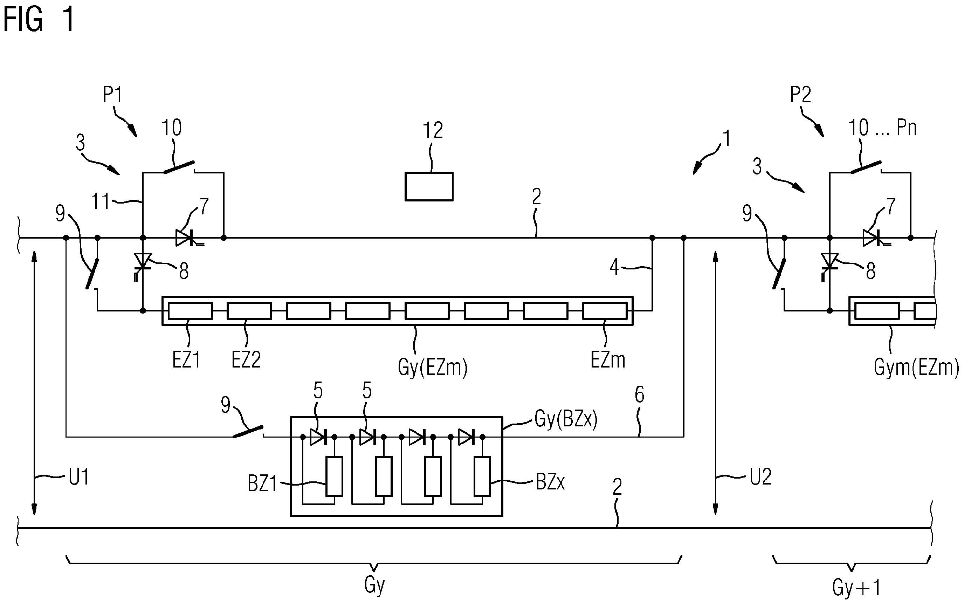

FIG 1 zeigt schematisch ein Ausführungsbeispiel für eine Hochspannungs-Gleichstrom-Übertragungsstrecke 1 (auch kurz HGÜ-Strecke genannt). FIG 1 stellt einen Teil der Hochspannungs-Gleichstrom-Übertragungsstrecke 1 dar. Die Hochspannungs-Gleichstrom-Übertragungsstrecke 1 kann ein- oder mehradrig (ein oder mehrere Leitungen) mit einem Pol (Monopolar-Strecke) oder zwei Polen (Bipolarstrecke) ausgebildet sein.

Im Ausführungsbeispiel nach FIG 1 kann es sich um eine zweiadrige Monopolar-Strecke oder um eine einadrige Bipolarstrecke handeln.

Wie in FIG 1 gezeigt, ist entlang zumindest einer der Leitungen 2 mindestens ein Entnahme-/Einspeisepunkt P1 bis Pz vorgesehen.

Am jeweiligen Entnahme-/Einspeisepunkt P1 bis Pz ist eine Thyristor-Schaltanordnung 3 vorgesehen, mittels welcher mindestens eine Gruppe Gy(EZm) von Elektrolysezellenstapeln EZ1 bis EZm und/oder mindestens eine Gruppe Gy(BZx) von Brennstoffzellenstapeln BZ1 bis BZx direkt in die Leitung 2 der Hochspannungs-Gleichstrom-Übertragungsstrecke 1 zu-/abschaltbar sind bzw. ist.

Ein Brennstoffzellenstapel BZ1 bis BZx (auch Brennstoffzellen-Stack genannt) ist insbesondere aus mehreren gestapelten und miteinander verbundenen Brennstoffzellen gebildet. Ein Elektrolysezellenstapel EZ1 bis EZm (auch Elektrolysezellen-Stack genannt) ist insbesondere aus mehreren gestapelten und miteinander verbundenen Elektrolysezellen gebildet.

Dabei ist vorgesehen, dass die Elektrolysezellenstapel EZ1 bis EZm einer jeweiligen Gruppen Gy(EZm), Gy+1(EZm) in einem parallel zu der Leitung 2 angeordneten Bypass 4 in Reihe geschaltet sind. Im Ausführungsbeispiel umfasst die Gruppe Gy(EZm) von Elektrolysezellenstapeln EZm acht Elektrolysezellenstapel EZ1 bis EZ8, die in Reihe geschaltet sind.

Demgegenüber sind die Brennstoffzellenstapel BZx einer jeweiligen Gruppe Gy(BZx), Gy+1(BZx) über jeweils eine zugehörige Bypass-Diode 5 in einem parallel zu der Leitung 2 angeordneten weiteren Bypass 6 parallel zu diesem weiteren Bypass 6 geschaltet. Im Ausführungsbeispiel umfasst die Gruppe Gy(BZx) von Brennstoffzellenstapeln BZx vier Brennstoffzellenstapel BZ1 bis BZ4.

Vorzugsweise bilden die Gruppe/n Gy(EZm) von Elektrolysezellenstapeln EZm und/oder die Gruppe/n Gy(BZx) von Brennstoffzellenstapeln BZx eine Entnahme-/Speisestelle oder Entnahme-/Speiseanlage. Die Entnahme und/oder Einspeisung der über den Entnahme-/Einspeisepunkt P1 dieser Entnahme-/Speiseanlage entnehmbaren/einspeisbaren Energie kann dabei variabel erfolgen, indem einzelne Stapel, insbesondere einzelne Elektrolysezellenstapel EZ1 bis EZm und/oder Brennstoffzellenstapel BZ1 bis BZx zu- oder abgeschaltet werden. Hierzu wird insbesondere als Anzahl der Stapelein Vielfaches von zwei gewählt, so dass je nach Bedarf zwei, vier, sechs oder acht Stapeleiner Gruppe oder mehrerer Gruppen mit einer Leistung von 10 MW, 20 MW, 30 MW oder 40 MW zugeschaltet oder abgeschaltet werden können.

Beispielsweise können in einer Hochspannungs-Gleichstrom-Übertragungsstrecke 1 mit einer Eingangsspannung U1 von 800 kV an eine der Leitungen 2 als Elektrolysezellenstapel EZ1 bis EZ8 Stapel mit einer Leistung von 2,5 MW, einem Innenwiderstand von 0.6 Ohm bis ein Ohm und einer Gesamtleistung aller acht Stapel von 20 MW variabel zugeschaltet werden.

Bei Zuschaltung aller Elektrolysezellenstapel EZ1 bis EZ8 mit einer Gesamtleistung von 20 MW kommt es dann infolge der Energieentnahme je Elektrolysezellenstapel EZ1 bis EZ8 zu einem Spannungsabfall von 690 V bei einer Stromstärke von 3630 A, so dass am Ausgang der Gruppe Gy(EZm) eine Ausgangsspannung U2 von 794,480 V an der Hochspannungs-Gleichstrom-Übertragungsstrecke 1 anliegt. Alternativ können nur zwei, vier oder sechs der Elektrolysezellenstapel EZ1 bis EZ6 der betreffenden Gruppe Gy(EZ1 bis EZm) mit einer Gesamtleistung von jeweils 5 MW, 10 MW bzw. 15 MW zugeschaltet werden.

Zur variablen gruppenweisen Zu-/Abschaltung, insbesondere für eine Energieentnahme/-einspeisung in großen Stufen, ist je Gruppe Gy(EZm, BZx) von Elektrolysezellenstapel EZm und/oder Brennstoffzellenstapel BZx mindestens ein Gruppen-Schaltelement 9 vorgesehen.

Für eine variable feinere Energieentnahme/-einspeisung kann je Elektrolysezellestapel EZm und/oder je Brennstoffzellestapel BZx einer jeweiligen Gruppe Gy(EZm, BZx) mindestens ein Einzel-Schaltelement vorgesehen sein, das nicht näher dargestellt ist. Mittels des nicht dargestellten Einzel-Schaltelements kann oder können stufenweise in kleinen Stufen ein oder mehrere Elektrolysezellenstapel EZm und/oder Brennstoffzellenstapel BZx einer einzelnen Gruppe Gy(EZm, BZx) zu-/abgeschaltet werden und somit Energie in kleinen Schritten entnommen bzw. eingespeist werden.

Gemäß einer Ausführungsform umfasst die Thyristor-Schaltanordnung 3 je einer Gruppe Gy(EZm) von Elektrolysezellenstapeln EZm und/oder einer Gruppe Gy(BZx) von Brennstoffzellenstapeln BZx mindestens einen Netz-Thyristor 7 und mindestens einen Bypass-Thyristor 8. Zusätzlich umfasst die Thyristor-Schaltanordnung 3 ein Notfall-Schließelement 10 in einer Bypass-Leitung 11.

Zur Ansteuerung der Thyristor-Schaltanordnung 3 mit dem Netz-Thyristor 7, dem Bypass-Thyristor 8, dem Notfall-Schließelement 10 und der Gruppen-Schaltelemente 9 ist je Entnahme-/Einspeisepunkt P1 bis Pz eine Steuerelektronik 12 vorgesehen, die herkömmlich drahtlos oder drahtgebunden mit diesen Komponenten verbunden ist.

Dabei kann je Gruppe Gy eine zugehörige Steuerelektronik 12 vorgesehen sein. Alternativ kann bei einer kompakten Anlage aus mehreren Gruppen Gy bis Gy+z eine zentrale Steuerelektronik 12 für alle oder mehrere Gruppen vorgesehen sein.

Im Normalbetrieb ohne Zusatzeinspeisung/-entnahme an der Hochspannungs-Gleichstrom-Übertragungsstrecke 1 ist der Netz-Thyristor 7 offen und das Notfall-Schließelement 10 geschlossen, so dass der Netz-Thyristor 7 entlastet ist und die Energie ohne zusätzlichen Energieverlust über die Leitung 2 transportiert werden kann. Der Bypass-Thyristor 8 sperrt und die Gruppen-Schaltelemente 9 sind offen.

Im Falle der Vorgabe oder des Wunsches einer Entnahme von Energie und Zuschaltung einer oder mehrerer Elektrolysezellenstapeln EZ1 bis EZm der Gruppe Gy(EZ1 bis EZm) in die Leitung 2 ist die Steuerelektronik 12 derart eingerichtet, dass diese zumindest folgende Schritte ausführt:
- zunächst langsames Öffnen des Bypass-Thyristors 8 im Bypass 4 bei weiterhin geöffnetem Netz-Thyristor 7 und geschlossenem Notfall-Schließelement 10,
- bei offenem Bypass-Thyristor 8 im Bypass 4 Schalten, insbesondere Schließen, des Gruppen-Schaltelements 9 (zusätzlich oder alternativ Schalten, insbesondere Schließen, der betreffenden Einzel-Schaltelemente) im Bypass 4 zur Entlastung des Bypass-Thyristors 8 und Öffnen des Notfall-Schließelements 10, und
- langsames Sperren des Netz-Thyristors 7, so dass die Energie der Leitung 2 über den Bypass 4 und die Elektrolysezellenstapel EZ1 bis EZm geführt wird und zusätzlich von den zugeschalteten Elektrolysezellenstapeln EZ1 bis EZm der Gruppe Gy Energie der Leitung 2 entnommen wird.

Kommt es zu einem Fehlerfall, so kann mittels des sofortigen Schaltens des Notfall-Schließelements 10 die Zuschaltung der Elektrolysezellenstapel EZ1 bis EZm im Millisekundenbereich abgeschaltet werden, so dass die Energie bei geschlossenem/ gesperrtem Netz-Thyristor 7 über die Bypass-Leitung 11 in der Leitung 2 transportiert wird und kein weiterer Transport der Energie über den Bypass 4 erfolgt. Hierzu ist das Notfall-Schließelement 10 als ein Schließer ausgebildet, der bei geschlossenem oder gesperrtem Netz-Thyristor 7 und somit gesperrter Leitung 2 den Übergangswiderstand minimiert.

Zur Abschaltung der der Entnahme der Energie durch die Elektrolysezellenstapel EZ1 bis EZm ist die Steuerelektronik 12 derart eingerichtet, dass sie zumindest folgende Schritt ausführen kann:
- langsames Öffnen des Netz-Thyristors 7 bei geöffnetem Bypass-Thyristor 8 im Bypass 4 und geschlossenem Gruppen-Schaltelement 9,
- bei offenem Netz-Thyristor 7 Schalten des Notfall-Schließelements 10, insbesondere Schließen zur Entlastung des Netz-Thyristors 7, und Öffnen des Gruppen-Schaltelements 9,
- langsames Sperren des Bypass-Thyristors 8, so dass die Energie nicht mehr über den Bypass 4 und die Elektrolysezellenstapel EZ1 bis EZm, sondern über die Leitung 2 und die Bypass-Leitung 11 in der Leitung 2 geführt wird, so dass keine zusätzliche Energie entnommen werden kann.

Alternativ oder zusätzlich zu der beschriebenen Sequenz der Zu- oder Abschaltung der Gruppe Gy(EZ1 bis EZm) der Elektrolysezellenstapel EZ1 bis EZm kann die Zu- oder Abschaltung der Gruppe Gy(BZ1 bis BZx) der Brennstoffzellenstapeln BZ1 bis BZx und/oder weiterer Gruppen Gy+1(EZm, BZx) in analoger Art und Weise erfolgen. Anstelle einer Entnahme von Energie durch die Zuschaltung mindestens einer der Gruppen von Elektrolysezellenstapeln EZ1 bis EZm erfolgt bei Zuschaltung mindestens einer der Gruppen von Brennstoffzellenstapeln BZ1 bis BZx eine Einspeisung zusätzlicher Energie in die Leitung 2.

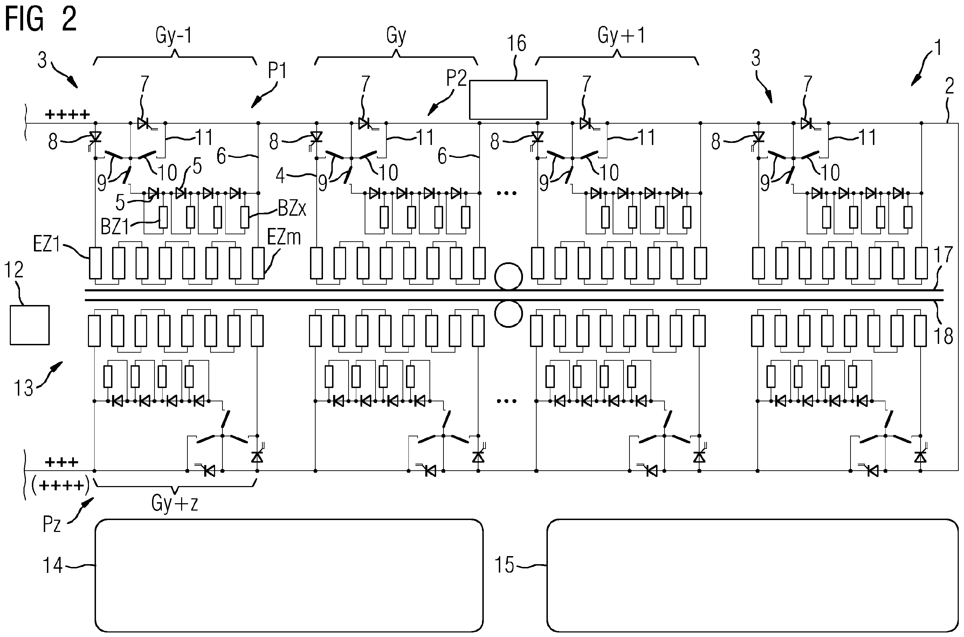

FIG 2 zeigt ein weiteres Ausführungsbeispiel für eine Hochspannungs-Gleichstrom-Übertragungsstrecke 1 mit einer Anzahl von mittels der Thyristor-Schaltanordnung 3 direkt zu-/abschaltbaren Gruppen Gy bis Gy+z von Elektrolysezellenstapeln EZ1 bis EZm und/oder Brennstoffzellenstapeln BZ1 bis BZx.

Im Ausführungsbeispiel nach FIG 2 bilden mehrere Gruppen Gy-1 bis Gy+z von Elektrolysezellenstapel EZm und/oder Brennstoffzellenstapel BZx eine gemeinsame Entnahme-/Speiseanlage 13 zur Entnahme und/oder Zuspeisung zusätzlicher Energie aus bzw. in die Leitung 2 der Hochspannungs-Gleichstrom-Übertragungsstrecke 1.

Zur Versorgung und Kühlung der Elektrolysezellenstapel EZm und/oder der Brennstoffzellenstapel BZx dieser Entnahme-/Speiseanlage 13 sind ein zentraler Wasserstoff-Speicher 14, ein zentraler Sauerstoff-Speicher 15 und ein zentrales Kühlsystem 16 vorgesehen, die fluidisch und/oder wärmetechnisch in nicht näher dargestellter herkömmlicher Art und Weise über Wasserstoff-Sammelleitungen 17 und Sauerstoff-Sammelleitungen 18 mit den Elektrolysezellenstapeln EZm und/oder den Brennstoffzellenstapeln BZx gekoppelt sind.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Hochspannungs-Gleichstrom-Übertragungsstrecke (1), umfassend mindestens eine oder zwei oder mehrere Leitungen (2), wobei entlang zumindest einer der Leitungen (2) mindestens ein Entnahme-/Einspeisepunkt (P1 bis Pz) vorgesehen ist, **dadurch gekennzeichnet, dass**
- an mindestens einem Entnahme-/Einspeisepunkt (P1 bis Pz) mindestens eine Gruppe (Gy bis Gy+z) von Elektrolysezellenstapeln (EZ1 bis EZm) direkt mittels einer Thyristor-Schaltanordnung (3) zuschaltbar ist,
- wobei die Thyristor-Schaltanordnung (3) je einer Gruppe (Gy bis Gy+z) von Elektrolysezellenstapeln (EZ1 bis EZm) einen Netz-Thyristor (7), einen Bypass-Thyristor (8) und ein parallel zu dem Netz-Thyristor (7) geschaltetes Notfall-Schließelement (10) in einer Bypass-Leitung (11) umfasst.

2. Hochspannungs-Gleichstrom-Übertragungsstrecke (1) nach Anspruch 1, wobei die Elektrolysezellenstapel (EZ1 bis EZm) einer jeweiligen Gruppen (Gy bis Gy+z) in einem parallel zu der Leitung (2) angeordneten Bypass (4) in Reihe geschaltet sind.

3. Hochspannungs-Gleichstrom-Übertragungsstrecke (1) nach Anspruch 1 oder 2, wobei an mindestens einem Entnahme-/Einspeisepunkt (P1 bis Pz) mindestens eine Gruppe (Gy bis Gy+z) von Brennstoffzellenstapeln (BZ1 bis BZx) direkt mittels einer Thyristor-Schaltanordnung (3) zuschaltbar ist.

4. Hochspannungs-Gleichstrom-Übertragungsstrecke (1) nach Anspruch 3, wobei die Brennstoffzellenstapel (BZ1 bis BZx) einer jeweiligen Gruppe (Gy bis Gy+z) über jeweils eine zugehörige Bypass-Diode (5) in einem parallel zu der Leitung (2) angeordneten weiteren Bypass (6) parallel zu diesem weiteren Bypass (6) geschaltet sind.

5. Hochspannungs-Gleichstrom-Übertragungsstrecke (1) nach Anspruch 3 oder 4, wobei die Thyristor-Schaltanordnung (3) je einer Gruppe (Gy bis Gy+z) von Brennstoffzellenstapeln (BZ1 bis BZx) einen Netz-Thyristor (7), einen Bypass-Thyristor (8) und ein parallel zu dem Netz-Thyristor (7) geschaltetes Notfall-Schließelement (10) in einer Bypass-Leitung (11) umfasst.

6. Hochspannungs-Gleichstrom-Übertragungsstrecke (1) nach einem der Ansprüche 3 bis 5, wobei je Gruppe (Gy bis Gy+z) von Brennstoffzellenstapeln (BZ1 bis BZx) mindestens ein Gruppen-Schaltelement (9) vorgesehen ist, so dass stufenweise eine oder mehrere Gruppen (Gy bis Gy+z) von Brennstoffzellenstapeln (BZ1 bis BZx) zuschaltbar sind bzw. ist.

7. Hochspannungs-Gleichstrom-Übertragungsstrecke (1) nach einem der Ansprüche 3 bis 6, wobei je Brennstoffzellenstapel (BZ1 bis BZx) einer jeweiligen Gruppe (Gy bis Gy+z) mindestens ein Einzel-Schaltelement vorgesehen ist, so dass stufenweise ein oder mehrere Brennstoffzellenstapel (BZ1 bis BZx) der jeweiligen Gruppe (Gy bis Gy+z) zuschaltbar sind bzw. ist.

8. Hochspannungs-Gleichstrom-Übertragungsstrecke (1) nach einem der Ansprüche 3 bis 7, wobei mehrere Gruppen (Gy bis Gy+z) von Brennstoffzellenstapeln (BZ1 bis BZx) mit einem zentralen Wasserstoff-Speicher (14) und einem zentralen Sauerstoff-Speicher (15) fluidisch koppelbar sind.

9. Hochspannungs-Gleichstrom-Übertragungsstrecke (1) nach einem der Ansprüche 3 bis 8, wobei ein zentrales Kühlsystem (16) für mehrere Gruppen (Gy bis Gy+z) von Brennstoffzellenstapeln (BZ1 bis BZx) vorgesehen ist.

10. Hochspannungs-Gleichstrom-Übertragungsstrecke (1) nach einem der vorhergehenden Ansprüche, wobei eine jeweilige Gruppe (Gy bis Gy+z) von Elektrolysezellenstapeln (EZ1 bis EZm) mindestens acht Elektrolysezellenstapel umfasst, die in Reihe geschaltet sind.

11. Hochspannungs-Gleichstrom-Übertragungsstrecke (1) nach einem der vorhergehenden Ansprüche, wobei je Gruppe (Gy bis Gy+z) von Elektrolysezellenstapeln (EZ1 bis EZm) mindestens ein Gruppen-Schaltelement (9) vorgesehen ist, so dass stufenweise eine oder mehrere Gruppen (Gy bis Gy+z) von Elektrolysezellenstapeln (EZ1 bis EZm) zuschaltbar sind bzw. ist.

12. Hochspannungs-Gleichstrom-Übertragungsstrecke (1) nach einem der vorhergehenden Ansprüche, wobei je Elektrolysezellestapel (EZ1 bis EZm) einer jeweiligen Gruppe (Gy bis Gy+z) mindestens ein Einzel-Schaltelement vorgesehen ist, so dass stufenweise ein oder mehrere Elektrolysezellenstapel (EZ1 bis EZm) der jeweiligen Gruppe (Gy bis Gy+z) zuschaltbar sind bzw. ist.

13. Hochspannungs-Gleichstrom-Übertragungsstrecke (1) nach einem der vorhergehenden Ansprüche, wobei je Entnahme-/Einspeisepunkt (P1 bis Pz) eine Steuerelektronik (12) vorgesehen ist.

14. Hochspannungs-Gleichstrom-Übertragungsstrecke (1) nach einem der vorhergehenden Ansprüche, wobei mehrere Gruppen (Gy bis Gy+z) von Elektrolysezellenstapeln (EZ1 bis EZm) mit einem zentralen Wasserstoff-Speicher (14) und einem zentralen Sauerstoff-Speicher (15) fluidisch koppelbar sind.

15. Hochspannungs-Gleichstrom-Übertragungsstrecke (1) nach einem der vorhergehenden Ansprüche, wobei ein zentrales Kühlsystem (16) für mehrere Gruppen (Gy bis Gy+z) von Elektrolysezellenstapeln (EZ1 bis EZm) vorgesehen ist.

## Claims

1. High-voltage direct current transmission path (1), comprising at least one or two or more lines (2), wherein at least one tapping/feeding point (P1 to Pz) is provided along at least one of the lines (2),
**characterised in that**
- at at least one tapping/feeding point (P1 to Pz) at least one group (Gy to Gy+z) of electrolytic cell stacks (EZ1 to EZm) can be connected directly by means of a thyristor switching arrangement (3),
- wherein the thyristor switching arrangement (3) of each group (Gy to Gy+z) of electrolytic cell stacks (EZ1 to EZm) comprises a power thyristor (7), a bypass thyristor (8) and an emergency shutoff element (10) switched in parallel to the power thyristor (7) in a bypass line (11).

2. High-voltage direct current transmission path (1) according to claim 1, wherein the electrolytic cell stacks (EZ1 to EZm) of a respective group (Gy to Gy+z) are switched in series in a bypass (4) arranged in parallel to the line (2).

3. High-voltage direct current transmission path (1) according to claim 1 or 2, wherein at least one group (Gy to Gy+z) of fuel cell stacks (BZ1 to BZx) can be connected directly by means of a thyristor switching arrangement (3) at at least one tapping/feeding point (P1 to Pz).

4. High-voltage direct current transmission path (1) according to claim 3, wherein the fuel cell stacks (BZ1 to BZx) of a respective group (Gy to Gy+z) are switched via an associated bypass diode (5) in each case in a further bypass (6) arranged in parallel to the line (2) in parallel to this further bypass (6) .

5. High-voltage direct current transmission path (1) according to claim 3 or 4, wherein the thyristor switching arrangement (3) of each group (Gy to Gy+z) of fuel cell stacks (BZ1 to BZx) comprises a power thyristor (7), a bypass thyristor (8) and an emergency shutoff element (10) switched in parallel to the power thyristor (7) in a bypass line (11).

6. High-voltage direct current transmission path (1) according to one of claims 3 to 5, wherein at least one group switching element (9) is provided per group (Gy to Gy+z) of fuel cell stacks (BZ1 to BZx), so that one or more groups (Gy to Gy+z) of fuel cell stacks (BZ1 to BZx) is or are able to be connected in stages.

7. High-voltage direct current transmission path (1) according to one of claims 3 to 6, wherein at least one individual switching element is provided for each fuel cell stack (BZ1 to BZx) of a respective group (Gy to Gy+z), so that one or more fuel cell stacks (BZ1 to BZx) of the respective group (Gy to Gy+z) is or are able to be connected in stages.

8. High-voltage direct current transmission path (1) according to one of claims 3 to 7, wherein a number of groups (Gy to Gy+z) of fuel cell stacks (BZ1 to BZx) are able to be coupled fluidically to a central hydrogen store (14) and a central oxygen store (15).

9. High-voltage direct current transmission path (1) according to one of claims 3 to 8, wherein a central cooling system (16) is provided for a number of groups (Gy to Gy+z) of fuel cell stacks (BZ1 to BZx).

10. High-voltage direct current transmission path (1) according to one of the preceding claims, wherein a respective group (Gy to Gy+z) of electrolytic cell stacks (EZ1 to EZm) comprises at least eight electrolytic cell stacks, which are switched in series.

11. High-voltage direct current transmission path (1) according to one of the preceding claims, wherein at least one group switching element (9) is provided for each group (Gy to Gy+z) of electrolytic cell stacks (EZ1 to EZm) so that one or more groups (Gy to Gy+z) of electrolytic cell stacks (EZ1 to EZm) is or are able to be connected in stages.

12. High-voltage direct current transmission path (1) according to one of the preceding claims, wherein at least one individual switching element is provided for each electrolytic cell stack (EZ1 to EZm) of a respective group (Gy to Gy+z), so that one or more electrolytic cell stack (EZ1 to EZm) of the group (Gy to Gy+z) is or are able to be connected in stages.

13. High-voltage direct current transmission path (1) according to one of the preceding claims, wherein control electronics (12) is provided for each tapping/feeding point (P1 to Pz).

14. High-voltage direct current transmission path (1) according to one of the preceding claims, wherein a number of groups (Gy to Gy+z) of electrolytic cell stacks (EZ1 to EZm) are able to be coupled fluidically to a central hydrogen store (14) and a central oxygen store (15).

15. High-voltage direct current transmission path (1) according to one of the preceding claims, wherein a central cooling system (16) is provided for a number of groups (Gy to Gy+z) of electrolytic cell stacks (EZ1 to EZm).

## Revendications

1. Section (1) de transmission de courant continu de haute tension, comprenant au moins une ou deux ou plusieurs lignes (2), dans laquelle il est prévu au moins un point (P1 à Pz) de prélèvement/d'injection sur au moins l'une des lignes (2),
**caractérisée en ce que**
- en au moins un point (P1 à Pz) de prélèvement/d'injection peut être branché, directement au moyen d'un montage (3) de commutation à thyristor, au moins un groupe (Gy à Gy+z) d'empilements (EZ1 à EZm) de cellules d'électrolyse,
- dans laquelle le montage (3) de commutation à thyristor comprend respectivement un groupe (Gy à Gy+z) d'empilements (EZ1 à EZm) de cellules d'électrolyse, un thyristor (7) de réseau, un thyristor (8) de dérivation et, dans une ligne (11) de dérivation, un élément (10) de fermeture en cas d'urgence monté en parallèle au thyristor (7) de réseau.

2. Section (1) de transmission de courant continu de haute tension suivant la revendication 1, dans laquelle les empilements (EZ1 à EZm) de cellules d'électrolyse d'un groupe (Gy à Gy+z) respectif sont montés en série dans une dérivation (4) montée en parallèle à la ligne (2).

3. Section (1) de transmission de courant continu de haute tension suivant la revendication 1 ou 2, dans laquelle, sur au moins un point (P1 à Pz) de prélèvement/injection, peut être branché, directement au moyen d'un montage (3) de commutation à thyristor, au moins un groupe (Gy à Gy+z) d'empilements (BZ1 à BZx) de piles à combustible.

4. Section (1) de transmission de courant continu de haute tension suivant la revendication 3, dans laquelle les empilements (BZ1 à BZx) de piles à combustible d'un groupe (Gy à Gy+z) respectif sont montés par respectivement une diode (5) de dérivation associée dans une autre dérivation (6) montée en parallèle à la ligne (2), en parallèle à cette autre dérivation (6).

5. Section (1) de transmission de courant continu de haute tension suivant la revendication 3 ou 4, dans laquelle le montage (3) de commutation à thyristor comprend respectivement un groupe (Gy à Gy+z) d'empilements (BZ1 à BZx) de piles à combustible, un réseau (7) de thyristor, un thyristor (8) de dérivation et, dans une ligne (11) en dérivation, un élément (10) de fermeture en cas d'urgence monté en parallèle au thyristor (7) de réseau.

6. Section (1) de transmission de courant continu de haute tension suivant l'une des revendications 3 à 5, dans laquelle il est prévu, pour chaque groupe (Gy à Gy+z) d'empilements (BZ1 à BZx) de piles à combustible, au moins un élément (9) de commutation de groupe, de manière à ce que, de façon échelonnée, un ou plusieurs groupes (Gy à Gy+z) d'empilements (BZ1 à BZx) de piles à combustible puissent être branchés.

7. Section (1) de transmission de courant continu de haute tension suivant l'une des revendications 3 à 6, dans laquelle il est prévu, pour chaque empilement (BZ1 à BZx) de piles à combustible d'un groupe (Gy à Gy+z) respectif, au moins un élément de commutation individuel, de manière à ce que, de façon échelonnée, un ou plusieurs empilements (BZ1 à BZx) de piles à combustible du groupe (Gy à Gy+z) respectif puissent être branchés.

8. Section (1) de transmission de courant continu de haute tension suivant l'une des revendications 3 à 7, dans laquelle plusieurs groupes (Gy à Gy+z) d'empilements (BZ1 à BZx) de piles à combustible peuvent être couplés fluidiquement à un réservoir (14) central d'hydrogène et un réservoir (15) central d'oxygène.

9. Section (1) de transmission de courant continu de haute tension suivant l'une des revendications 3 à 8, dans laquelle il est prévu un système (16) central de refroidissement de plusieurs groupes (Gy à Gy+z) d'empilements (BZ1 à BZx) de piles à combustible.

10. Section (1) de transmission de courant continu de haute tension suivant l'une des revendications précédentes, dans laquelle un groupe (Gy à Gy+z) respectif d'empilements (EZ1 à EZm) de cellules d'électrolyse comprend au moins un empilement de cellules d'électrolyse qui sont montées en série.

11. Section (1) de transmission de courant continu de haute tension suivant l'une des revendications précédentes, dans laquelle, pour chaque groupe (Gy à Gy+z) d'empilements (EZ1 à EZm) de cellules d'électrolyse, est prévu au moins un élément (9) de commutation de groupes, de manière à ce que, de façon échelonnée, un ou plusieurs groupe (Gy à Gy+z) d'empilements (EZ1 à EZm) de cellules d'électrolyse puissent être branchés.

12. Section (1) de transmission de courant continu de haute tension suivant l'une des revendications précédentes, dans laquelle, pour chaque empilement (EZ1 à EZm) de cellules d'électrolyse d'un groupe (Gy à Gy+z) respectif, est prévu au moins un élément de commutation individuel, de manière à ce que, de façon échelonnée, un ou plusieurs empilements (EZ1 à EZm) de cellules d'électrolyse du groupe (Gy à Gy+z) respectif puissent être branchés.

13. Section (1) de transmission de courant continu de haute tension suivant l'une des revendications précédentes, dans laquelle, pour chaque point (P1 à Pz) de prélèvement/injection, est prévue une électronique double commande.

14. Section (1) de transmission de courant continu de haute tension suivant l'une des revendications précédentes, dans laquelle, plusieurs groupes (Gy à Gy+z) d'empilements (EZ1 à EZm) de cellules d'électrolyse peuvent être couplés fluidiquement à un réservoir (14) central d'hydrogène et à une réservoir (15) central d'oxygène.

15. Section (1) de transmission de courant continu de haute tension suivant l'une des revendications précédentes, dans laquelle il est prévu un système (16) central de refroidissement de plusieurs groupes (Gy à Gy+z) d'empilements (EZ1 à EZm) de cellules d'électrolyse.
